# EUROPÄISCHE PATENTSCHRIFT

(11) **EP 1 913 242 B1**
(45) Veröffentlichungstag und Bekanntmachung des Hinweises auf die Patenterteilung: **29.10.2008**
(21) Anmeldenummer: 06777585.8
(22) Anmeldetag: 05.07.2006
(51) Int. Cl.: F01N 1/04, F02C 7/045

(54) **SCHALLDÄMPFER FÜR GASTURBINENANLAGEN**
SOUND ABSORBER FOR GAS TURBINE INSTALLATIONS
SILENCIEUX POUR INSTALLATIONS DE TURBINES A GAZ

(30) Priorität: 08.08.2005 CH 13082005
(43) Veröffentlichungstag der Anmeldung: 23.04.2008
(73) Patentinhaber: Alstom Technology Ltd, 5400 Baden (CH)
(72) Erfinder: MÜLLER, Christian, CH-5408 Ennetbaden (CH); ROTHBRUST, Matthias, CH-8953 Dietikon (CH); ROZMAN, Ivan, CH-5415 Nussbaumen (CH)
(86) Internationale Anmeldenummer: PCT/EP2006/063894
(87) Internationale Veröffentlichungsnummer: WO 2007/017317

(56) Entgegenhaltungen:
- WO-A-02/065447
- DE-A1- 4 433 103
- GB-A- 1 054 793
- GB-A- 2 277 710
- US-A- 4 441 578
- US-A- 5 709 529

## Beschreibung

### Technisches Gebiet

Die Erfindung betrifft eine Vorrichtung zum Einlass von Luft zu einem Kompressor einer Gasturbinenanlage und insbesondere eine Vorrichtung zur Dämpfung der Schallemissionen des Kompressors.

### Stand der Technik

Der Betrieb von Gasturbinenanlagen und insbesondere derer Kompressoren geht mit erheblichen Schallemissionen einher. Deshalb sind die Lufteinlasskanäle zu den Kompressoren mit verschiedenen Einrichtungen zur Schalldämpfung ausgerüstet.

Ein Schalldämpfer oder "silencer" in einem Lufteinlasskanal zu einem Kompressor für eine Gasturbinenanlage ist beispielsweise in US 6,260,658 offenbart. Der Schalldämpfer ist im vorderen, horizontal liegenden Bereich des Einlasskanals und senkrecht zur Strömungsrichtung der einströmenden Luft über den gesamten Querschnitt des Einlasskanals hinweg angeordnet. Er umfasst mehrere parallel verlaufende und durch Zwischenräume voneinander beabstandete Dämpfereinheiten, wobei die angesaugte Luft durch die Zwischenräume strömt. Die Dämpfereinheiten enthalten schallabsorbierendes Material aus Schaumstoff, Wolle, Mineralwolle, Fiberglas oder Basaltwolle.

Aus US 5,709,529 ist ein weiteres System zur Schalldämpfung in einer Turbomaschine bekannt. Es umfasst eine Kombination von gebogenen und parallel verlaufenden zueinander Leitblechen, die in einer Krümmung eines Einlasskanals angeordnet sind, und einer schallabsorbierenden Verkleidung der Innenwände einer Einlasskammer unmittelbar vor dem Einlass zur Turbomaschine. Dabei sind die gebogenen Leitbleche voneinander in spezifischen Abständen gemäss dem Krümmungsradius des Lufteinlasskanals angeordnet. Das System bewirkt, dass sogenannte "spinning mode tone harmonics", die bei Turbomaschinen, insbesondere bei Flugzeugwerken, durch die Interaktion von Rotor und Leitschaufeln der Turbomaschine entstehen, ausgeblendet werden. Die schalldämpfende Verkleidung ist hierzu senkrecht zur Fortbewegungsrichtung der "spinning mode tones" ausgerichtet. Die Verkleidung besteht beispielsweise aus Mineralwolle, Fiberglas oder keramischen Fasern.

Ein Schalldämpfer in einem Lufteinlasskanal zu einem Kompressor für eine Gasturbinenanlage ist beispielsweise in GB 1 054 793 offenbart.

Im Lufteinlasskanal zum Kompressor einer Gasturbinenanlage tritt oft erhebliche Nässe auf, insbesondere beim Einsatz von "fogging"-Methoden, also durch gezielte Benetzung der Luft zwecks effizienterem Betrieb der Gasturbinenanlage. Ausserdem werden die Bauteile des Lufteinlasskanals mit SO₂, Salzen und anderen aggressiven chemischen Stoffen belastet. Die Anwendung der beschriebenen Schalldämpfungsvorrichtungen in Lufteinlasskanälen, die chemisch und/oder mit Nässe belastet sind, würden aufgrund ihrer Materialwahl an Wirksamkeit einbüssen, da einerseits die schalldämpfende Wirkung verringert wird und anderseits die Materialien degradieren würden. Insbesondere Glasfasern verlieren bei Nässe ihre Fähigkeit zur Schalldämpfung während Mineralwolle, Steinwolle sowie Polyurethan-Schaumstoff bei Angriff durch Salze oder Schwefeldioxid nicht materialbeständig sind.

### Darstellung der Erfindung

Es ist ausgehend vom genannten Stand der Technik der vorliegenden Erfindung die Aufgabe gestellt, eine verbesserte Vorrichtung zur Dämpfung von Schallemissionen eines Kompressors einer Gasturbinenanlage zu schaffen, die eine zuverlässige Schalldämpfungsgüte bei verschiedenen Betriebsbedingungen, insbesondere bei Belastung durch Nässe wie sie beispielsweise beim Einsatz von "fogging"-Betriebsmethoden auftritt, und durch chemische Substanzen. Insbesondere soll eine wirksame Schalldämpfung über eine vergrösserte Betriebsdauer gewährleistet sein.

Eine Vorrichtung für den Lufteinlass zu einem Kompressor einer Gasturbinenanlage weist einen Lufteinlasskanal und eine sich dem Lufteinlasskanal anschliessende Lufteinlasskammer, die in eine Lufteinlassöffnung des Kompressors mündet. Die Lufteinlasskammer weist eine Vorrichtung zur Dämpfung von Schallemissionen des Kompressors auf. Die Vorrichtung ist erfindungsgemäss an jenen Innenwänden der Einlasskammer angebracht, die gegenüber der Kompressoreinlassöffnung sowie in der Ebene der Kompressoreinlassöffnung sich erstrecken. Insbesondere weist die Vorrichtung erfindungsgemäss Melaminschaumstoff als schalldämpfendes Material auf.

Die erfindungsgemässe schalldämpfende Vorrichtung erweist die Vorzüge, dass sie im Vergleich zu bekannten Vorrichtungen mit herkömmlichen schalldämpfenden Materialien, wie zum Beispiel Mineralwolle oder Glasfasern, eine erhöhte Schalldämpfungsgüte aufweist. Zusätzlich und für die Lösung der gestellten Aufgabe ausschlaggebend weist der Melaminschaumstoff eine ausreichende Schalldämpfungsgüte bei sowohl trockenen als auch feuchten oder nassen Betriebsverhältnissen, wobei diese Schalldämpfungsgüte insbesondere auch über verlängerte Betriebszeiten gewährleistet ist. Dies beruht einerseits auf den Erkenntnissen, dass Melaminschaumstoff wasserabweisend ist und bei Feuchtigkeit oder Nässe seine Form und sein Volumen beibehält und zusätzlich auch chemisch resistent ist, insbesondere gegen die bei Gasturbinenanlagen vorkommenden Substanzen wie Salze, Schwefeldioxid sowie auch die für die Reinigung des Kompressors verwendeten Reinigungsmittel. Es hat sich insbesondere gezeigt, dass bei diesen chemisch aggressiven Verhältnissen keine Degradierung oder Schrumpfung des Materials entsteht wie es zum Beispiel bei Polyurethan oder Mineralwolle anzutreffen ist. Anderseits beruht es auf der Erkenntnis, dass insbesondere die Schalldämpfungsgüte von Melaminschaumstoff bei den nassen und/oder chemisch aggressiven Verhältnissen einer Gasturbinenanlage aufrechterhalten bleibt, sodass eine beständige schalldämpfende Wirkung über eine verlängerte Betriebszeit ermöglicht ist.
Zusätzlich eignet sich der Melaminschaumstoff besonders für die Anwendung in vorgenannter Dämpfungsvorrichtung, indem er nicht entflammbar ist. Diese Eigenschaft ist für diese Anwendung deshalb vorteilhaft, weil dadurch beim Befestigen des Melaminschaumstoffs Schweissvorgänge in Frage kommen. Wäre das verwendete Dämpfungsmaterial hingegen entflammbar, müssten andere Befestigungsmethoden eingesetzt werden, die in einer Lufteinlasskammer einer Gasturbine weniger vorteilhaft sind als Schweissen.
Schliesslich zeichnet sich der Melaminschaumstoff dadurch aus, dass er kostengünstig ist.

Die Anordnung der schalldämpfenden Vorrichtung an einer ersten Innenwand der Einlasskammer gegenüber dem Kompressoreinlass sowie einer ihr gegenüber liegenden zweiten Innenwand bewirkt eine Dämpfung eines Grossteils der Schallwellen aus dem Kompressor, die auf die erste Innenwand treffen sowie auch der Schallwellen, die durch Reflektion auf die zweite Innenwand treffen.

In einer ersten bevorzugten Ausführung der Erfindung ist der für die Schalldämpfung eingesetzte Melaminschaumstoff in vorfabrizierten perforierten Behältern eingebracht, die als Ganzes an den Innenwänden der Einlasskammer befestigt sind, indem sie zwischen gitterförmig an den Innenwänden angeordneten Rippen eingelassen und mittels Sicherungsplatten an den Rippen gesichert sind.

In einer zweiten bevorzugten Ausführung der Erfindung umfasst die Vorrichtung wiederum gitterförmig angeordnete Rippen an den Innenwänden der Einlasskammer, wobei Melaminschaumstoff jeweils zwischen den Rippen gelegt und mittels perforierten Platten, die sich über den Schaumstoff erstrecken an Ort gehalten ist. Die perforierten Platten sind mittels Sicherungsplatten, die jeweils an den Schnittstellen der Rippen angebracht sind, vor einem Herausfallen gesichert.

In beiden Ausführungen sind die Sicherungsplatten vorzugsweise durch Schweissen mit den Rippen verbunden. Ein Schweissen ist dank der Nicht-Entflammbarkeit des Melaminschaumstoffs ermöglicht. Durch das Schweissen werden insbesondere Kleinteile wie Schrauben und Bolzen gänzlich vermieden, die im Fall eines Lösens in den Kompressor gelangen könnten und dort Schäden an der Beschaufelung verursachen könnten.

Bei der Wahl der Masse sowohl der perforierten Platten als auch der vorfabrizierten Behälter sind jeweils deren Eigenschwingungen berücksichtigt. Die Dimensionen der Platten und Behälter sind hierzu entsprechend gewählt, sodass Schwingungen vermieden werden, welche die Befestigung der Sicherungsplatten und die Befestigung an den Innenwänden übermässig beanspruchen würden.

In einer weiteren bevorzugten Ausführung der Vorrichtung sind die erwähnten Innenwände der Einlasskammer zumindest teilweise durch die Schalldämpfungsvorrichtung abgedeckt. In speziellen Ausführungen sind mindestens 70% oder 80% der erwähnten Innenwandflächen durch die Vorrichtung abgedeckt.

### Kurze Beschreibung der Zeichnungen

Es zeigen
Figur 1 einen Schnitt durch eine Lufteinlassvorrichtung einer Gasturbinenanlage, mit der erfindungsgemässen schalldämpfenden Vorrichtung,
Figur 2 eine Frontansicht der Innenwand der Lufteinlasskammer mit Einlassöffnung zum Kompressor mit der erfindungsgemässen Vorrichtung mit gitterförmig angeordneten Rippen und dazwischen angeordneten, vorfabrizierten Behältern für den Melaminschaumstoff,
Figur 3 eine perspektivische Ansicht eines vorfabrizierten Behälters für den Melaminschaumstoff,
Figur 4 eine Detailansicht der Anordnung der vorfabrizierten Behälter zwischen den Rippen und der Sicherungsplatten zur Befestigung an den Schnittstellen der Rippen.
Figur 5 eine Detailansicht der Anordnung der perforierten Bleche über dem Melaminschaumstoff und der Sicherungsplatten an den Schnittstellen der Rippen,
Figur 6 eine Querschnittsansicht gemäss VI-VI in Figur 5 der Anordnung der perforierten Bleche auf Stegen an den Rippen,
Figur 7 eine Querschnittsansicht gemäss VII-VII in Figur 5 der Befestigung der perforierten Bleche durch Sicherungsplatten.

### Ausführung der Erfindung

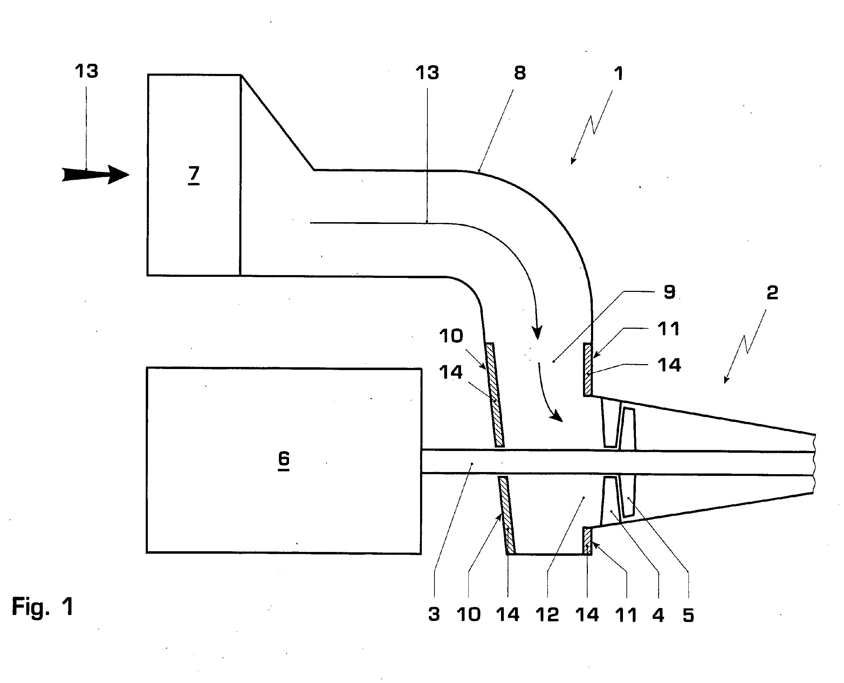

Figur 1 zeigt im Schnitt eine Lufteinlassvorrichtung 1 zu einem Kompressor 2 einer Gasturbinenanlage. Von der Gasturbinenanlage sind nur der Rotor 3, die ersten Leit- und Laufschaufelreihen 4 bzw. 5 des Kompressors 2 sowie das Gehäuse 6 des Generators gezeigt. Die Lufteinlassvorrichtung 1 umfasst eine Wetterhaube 7, in der eine Filteranlage angeordnet ist, und einen Lufteinlasskanal 8, dem sich nach einer Biegung des Lufteinlasskanals eine Lufteinlasskammer 9 anschliesst, die in eine Einlassöffnung 12 des Kompressors 2 mündet. Die Lufteinlasskammer 9 umfasst eine gegenüber der Einlassöffnung 12 des Kompressors 2 eine erste, leicht abgeschrägte Wand 10 mit einer Öffnung für den Rotor 3, und eine zweite Wand 11 in der Ebene der Einlassöffnung 12 zum Kompressor 2. Die Luftströmung zum Kompressor 2 ist mit dem Pfeil 13 gekennzeichnet. Erfindungsgemäss weist die Lufteinlasskammer 9 eine Schalldämpfungsvorrichtung 14 (schraffiert angedeutet) mit schalldämpfendem Material auf, insbesondere aus Melaminschaumstoff, womit die Wände 10 und 11 zumindest teilweise abgedeckt sind.

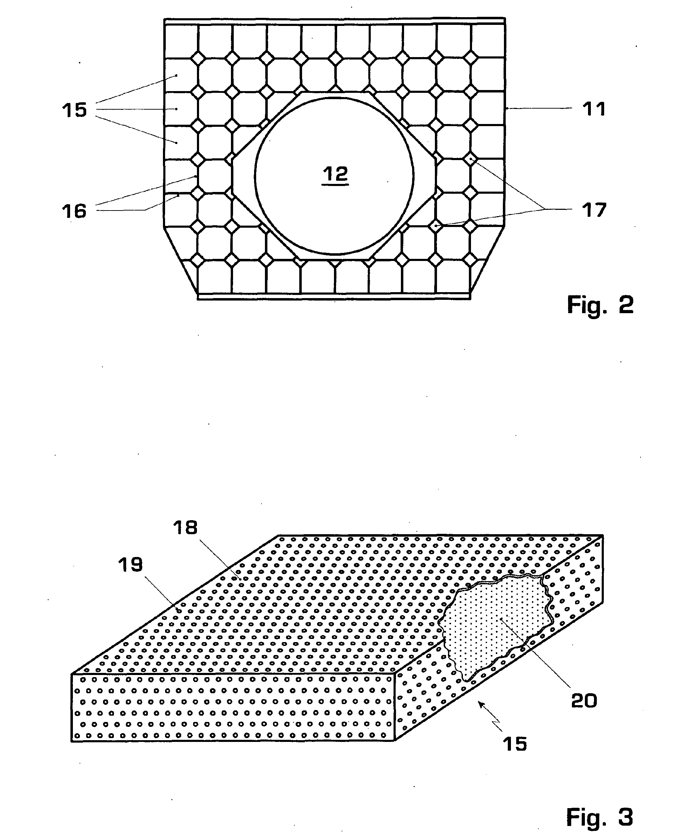

Figur 2 zeigt in einer Frontansicht ein Beispiel einer Auskleidung der Wand 11 mit Melaminschaumstoff, der in vorfabrizierten, rechteckigen Behältern eingebettet ist. Jeder Behälter 15 ist jeweils zwischen Rippen 16 gelegt, die an der Wand 11 gitterförmig angeordnet sind. An jeder Schnittstelle zwischen horizontal und vertikal verlaufenden Rippen 16, ist jeweils über der Eckpartie der Behälter 15 eine Sicherungsplatte 17 durch Schweissen befestigt, die ein Herausfallen der Behälter 15 verhindert. Die vorfabrizierten Behälter sind in diesem Ausführungsbeispiel rechteckig ausgeführt und jeweils "hochkant" angeordnet, indem die kurzen Seiten der Rechtecke sich horizontal erstrecken.

Figur 3 zeigt ein Beispiel eines vorfabrizierten Behälters 15. Er besteht aus einem Blech 18, das den hier beispielsweise quaderförmig geformten Melaminschaumstoff 20 auf allen Seiten umfasst und mit versetzt angeordneten Öffnungen 19 perforiert ist. Die Dimensionen der Behälter 15 sind so gewählt, dass diese nicht in Eigenschwingungen geraten, durch welche die Befestigung überbeansprucht würde.

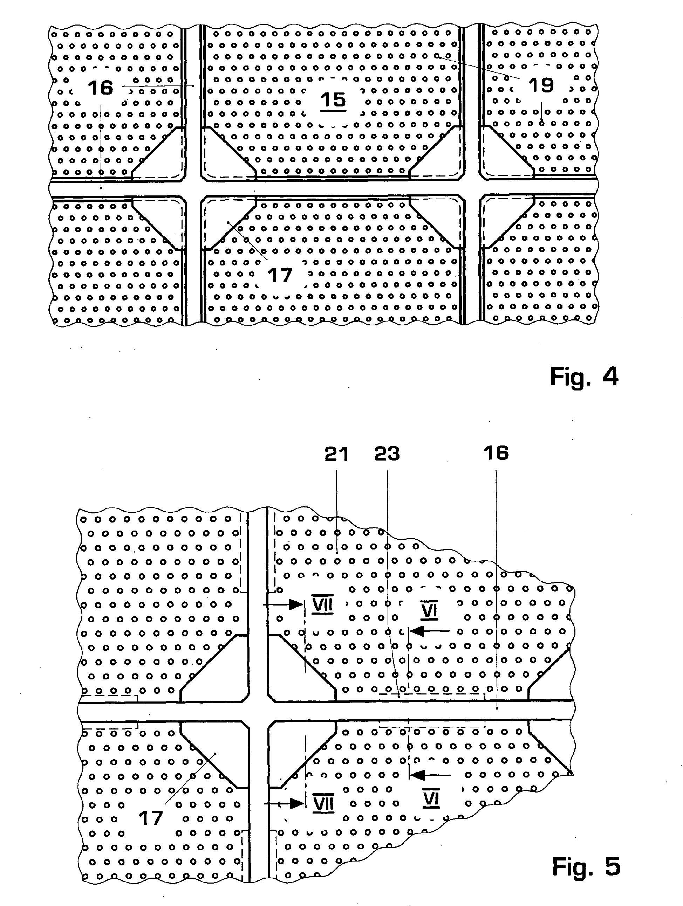

Figur 4 zeigt im Detail die erste bevorzugte Ausführung der Erfindung, bei der die Behälter 15 mittels Sicherungsplatten 17 befestigt sind, die an den Schnittstellen der Rippen 16 mit den Blechen 18 der Behälter 15 und den Rippen 16 verschweisst sind.

Figur 5 zeigt die zweite bevorzugte Ausführung der Erfindung, die der Melaminschaumstoff mittels Blechen und Sicherungsplatten befestigt ist. Wiederum sind an den Innenwänden der Einlasskammer Rippen 16 gitterförmig angeordnet, wie in Figur 2 gezeigt. Der Melaminschaumstoff ist hier direkt zwischen die Rippen 16 gelassen und jeweils mit perforierten Blechen 21 überdeckt. Die Perforierung besteht, wie im vorgängig gezeigten Beispiel der Behälter 15, aus versetzt angeordneten Öffnungen. Eine solche Anordnung der Öffnungen erweist sich aus Gründen der Fertigung und Festigkeit als vorteilhaft.

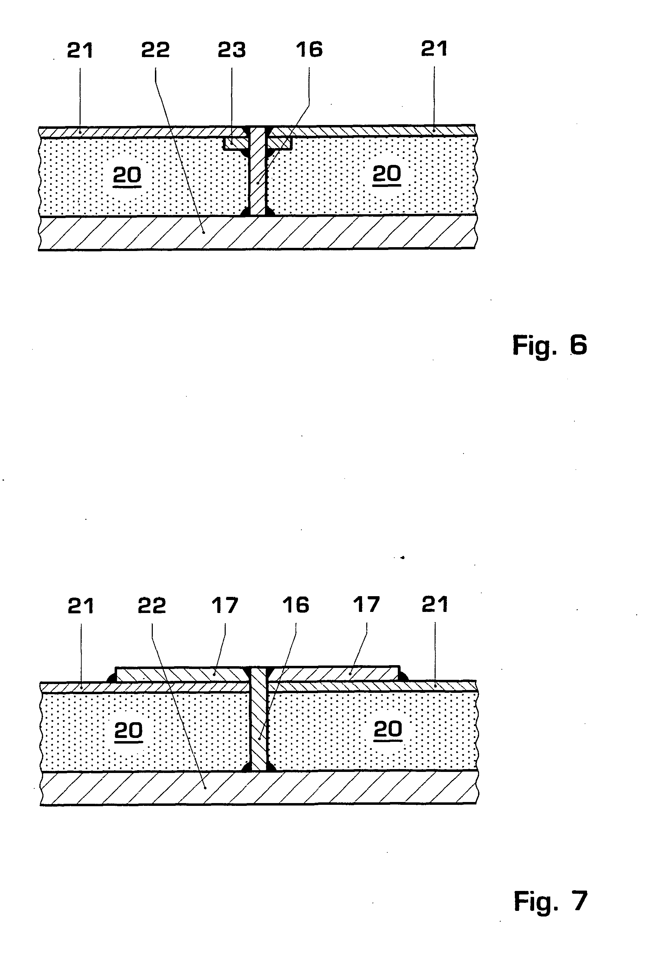

Vierteilige Sicherungsplatten 17 sind an den Schnittstellen der Rippen 16 mit den Rippen und den Blechen 21 verschweisst, wie in Figur 7 gezeigt. Ausserdem sind zwischen den Schnittstellen der Rippen 16 über einen gegebenen Bereich seitliche Stege 23 angeordnet zwecks Befestigung der Bleche an den Rippen 16 durch Schweissen, wie in Figur 6 gezeigt.

Figur 6 zeigt gemäss Schnitt VI-VI in Figur 5 eine äussere Wand 22 der Einlasskammer und eine mit der Wand 22 verschweisste Rippe 16. Der Melaminschaumstoff 20 liegt an der äusseren Wand 22 und ist mit dem Blech 21 überdeckt. Das Blech 21 ist auf einem, mit der Rippe 16 verschweissten seitlichen Steg 23 angeordnet und mit diesem verschweisst. Die Stege 23 haben den zusätzlichen Vorteil, dass sie die Einlasskammer versteiffen.

Figur 7 zeigt gemäss Schnitt VII-VII in Figur 5 die Befestigung mittels der Sicherungsplatten 17 im Bereich der Schnittstellen der Rippen 16. Der Melaminschaumstoff 20 liegt zwischen der äusseren Wand 22 und perforierten Blechen 21, und die Teile einer Sicherungsplatte 17 sind je mit der Rippe 16 und den Blechen 21 verschweisst.
Die Dimensionen der perforierten Bleche 21 sind wiederum entsprechend ihrer Eigenfrequenzen gewählt.

Die Innenwände 10 und 11 sind zumindest teilweise entweder durch die vorfabrizierten Behälter 15 oder durch den Melaminschaumstoff und die überdeckenden, perforierten Blechen 21 ausgekleidet. Der Grad der Auskleidung von mindestens 70% der Gesamtfläche der Wände 10 und 11 bewirkt eine ausreichende Schallabsorption, wobei ein Verkleidungsgrad von mindestens 80% optimal ist.
Der Melaminschaumstoff weist in allen der genannten Ausführungen eine Dicke auf, die einem Viertel der Schallwellenlänge jener Schallwelle entspricht, die im Schallspektrum am stärksten auftritt. Es wird davon ausgegangen, dass das Maximum einer Schallwelle bei einem Viertel ihrer Wellenlänge absorbiert wird. Beispielsweise weist der Melaminschaumstoff eine Dicke von 60 mm auf, vorzugsweise im Bereich von 45 bis 60 mm. Dies entspricht einem Viertel der Wellenlänge des Schalls bei 1250 Herz, der als erste Harmonische von den ersten zwei Schaufelreihen des Kompressors ausgeht. Schall der Oberwellenfrequenzen wird gleichermassen vom Schaumstoff dieses Dickenbereichs absorbiert.

Gemäss einer Variante der Erfindung sind nicht nur die erste und zweite Innenwand 10 und 11 der Einlasskammer 9 ausgekleidet, sondern auch die restlichen Innenwände der Einlasskammer, welche die Innenwände 10 und 11 verbinden, ausgekleidet. Dies gewährleistet eine Optimierung der Schalldämpfung durch Dämpfung der Schallwellen, die in einem Winkel zum Rotor aus dem Kompressor austreten und auf diese seitlichen Innenwände treffen.

### Bezugszeichenliste

- 1: Lufteinlassvorrichtung
- 2: Kompressor
- 3: Rotor
- 4: Leitschaufel
- 5: Laufschaufel
- 6: Generatorgehäuse
- 7: Filtergehäuse
- 8: Lufteinlasskanal
- 9: Einlasskammer
- 10: Innenwand der Einlasskammer
- 11: Innenwand der Einlasskammer in der Ebene der Kompressoreinlassöffnung
- 12: Einlassöffnung zum Kompressor
- 13: Luftströmung .
- 14: schalldämpfende Vorrichtung
- 15: vorfabrizierte Behälter
- 16: Rippen
- 17: Sicherungsplatten
- 18: Blech des vorfabrizierten Behälters
- 19: Perforierung am vorfabrizierten Behälter
- 20: Melaminschaumstoff
- 21: perforiertes Blech
- 22: äusssere Wand der Einlasskammer
- 23: Absatz, Steg an den Rippen

## Patentansprüche

1. Eine Vorrichtung (1) zum Einlass von Luft zu einem Kompressor (2) einer Gasturbinenanlage weist einen Lufteinlasskanal (8) und eine sich dem Lufteinlasskanal anschliessende Lufteinlasskammer (9), die zu einer Einlassöffnung (12) des Kompressors (2) führt,
sowie eine Vorrichtung zur Dämpfung von Schallemissionen aus dem Kompressor (2) auf
**dadurch gekennzeichnet, dass**
sowohl eine erste Innenwand (10) der Einlasskammer (9), die gegenüber dem Einlass (12) des Kompressors (2) liegt, als auch eine zweite Innenwand (11), die gegenüber der ersten Innenwand (10) und in der Ebene der Einlassöffnung (12) des Kompressors (2) liegt, je zumindest teilweise durch ein schalldämpfendes Material ausgekleidet ist, wobei das schalldämpfende Material Melaminschaumstoff (20) enthält.

2. Vorrichtung nach Anspruch 1
**dadurch gekennzeichnet, dass**
die erste und zweite Innenwand (10, 11) gitterförmig angeordnete Rippen (16) aufweisen und der Melaminschaumstoff (20) zwischen den Rippen (16) angeordnet ist.

3. Vorrichtung nach Anspruch 2
**dadurch gekennzeichnet, dass**
der Melaminschaumstoff jeweils in vorfabrizierten Behältern (15) angeordnet ist, die aus perforierten Blechen (18) bestehen und den Melaminschaumstoff (20) umfassen, und die vorfabrizierten Behälter (15) zwischen den Rippen (16) angeordnet sind.

4. Vorrichtung nach Anspruch 3
**dadurch gekennzeichnet, dass**
im Bereich der Schnittstellen der Rippen (16) Sicherungsplatten (17) mit den Rippen (16) und mit den perforierten Blechen (18) der vorfabrizierten Behälter (15) verschweisst sind.

5. Vorrichtung nach Anspruch 2
**dadurch gekennzeichnet, dass**
der Melaminschaumstoff (20) direkt zwischen die Rippen gelegt, ist und jeweils von einem perforierten Blech (21) überdeckt ist.

6. Vorrichtung nach Anspruch 5
**dadurch gekennzeichnet, dass**
die Rippen (16) jeweils beidseitig Stege (23) aufweisen, die mit den perforierten Blechen (21), die den Melaminschaumstoff (20) überdecken, verschweisst sind.

7. Vorrichtung nach Anspruch 5
**dadurch gekennzeichnet, dass**
im Bereich der Schnittstellen der Rippen (16) Sicherungsplatten (17) mit den Rippen (16) und den perforierten Blechen (21), die den Melaminschaumstoff (20) überdecken, verschweisst sind.

8. Vorrichtung nach Anspruch 1
**dadurch gekennzeichnet, dass**
die erste und zweite Innenwand (10, 11) der Einlasskammer (9) je zu mindestens 70% ihrer Gesamtfläche durch den Melaminschaumstoff ausgekleidet ist.

9. Vorrichtung nach Anspruch 1
**dadurch gekennzeichnet, dass**
die erste und zweite Innenwand (10, 11) je zu mindestens 80% ihrer Gesamtfläche durch den Melaminschaumstoff ausgekleidet ist.

10. Vorrichtung nach einem der vorgängigen Ansprüche
**dadurch gekennzeichnet, dass**
der Melaminschaumstoff eine Dicke aufweist, die gleich einem Viertel der Wellenlänge einer der stärksten Schallwellen ist, die aus dem Kompressor tritt.

11. Vorrichtung nach einem der vorgängigen Ansprüche
**dadurch gekennzeichnet, dass**
der Melaminschaumstoff eine Dicke in einem Bereich von 45 bis 60 mm aufweist

12. Vorrichtung nach einem der vorgängigen Ansprüche
**dadurch gekennzeichnet, dass**
weitere Innenwände der Einlasskammer (9), welche die erste Innenwand (10) und die zweite Innenwand (11) verbinden, zumindest teilweise durch den Melaminschaumstoff ausgekleidet sind.

## Claims

1. A device (1) for inlet of air to a compressor (2) of a gas turbine plant has an air inlet duct (8) and an air inlet chamber (9) which adjoins the air inlet duct and leads to an inlet opening (12) of the compressor (2),
and also a device for damping sound emissions from the compressor (2),
**characterized in that**
both a first inner wall (10) of the inlet chamber (9), which lies opposite the inlet (12) of the compressor (2), and a second inner wall (11), which lies opposite the first inner wall (10) and in the plane of the inlet opening (12) of the compressor (2), is at least partially lined in each case by means of a sound-damping material, wherein the sound-damping material contains melamine foam (20).

2. Device according to Claim 1,
**characterized in that**
the first and second inner walls (10, 11) have ribs (16) which are arranged in a latticed manner, and the melamine foam (20) is arranged between the ribs (16).

3. Device according to Claim 2,
**characterized in that**
the melamine foam is arranged in each case in prefabricated containers (15) which comprise perforated plates (18) and enclose the melamine foam (20), and the prefabricated containers (15) are arranged between the ribs (16).

4. Device according to Claim 3,
**characterized in that**
in the region of the intersecting points of the ribs (16), locking plates (17) are welded to the ribs (16) and to the perforated plates (18) of the prefabricated containers (15).

5. Device according to Claim 2,
**characterized in that**
the melamine foam (20) is laid directly between the ribs and is covered in each case by a perforated plate (21).

6. Device according to Claim 5,
**characterized in that**
the ribs (16) have crosspieces (23) in each case on both sides, which are welded to the perforated plates (21) which cover the melamine foam (20).

7. Device according to Claim 5,
**characterized in that**
in the region of the intersecting points of the ribs (16), locking plates (17) are welded to the ribs (16) and to the perforated plates (21) which cover the melamine foam (20).

8. Device according to Claim 1,
**characterized in that**
the first and second inner walls (10, 11) of the inlet chamber (9) are each lined to at least 70% of their total area by means of the melamine foam.

9. Device according to Claim 1,
**characterized in that**
the first and second inner walls (10, 11) are each lined to at least 80% of their total area by means of the melamine foam.

10. Device according to one of the preceding claims,
**characterized in that**
the melamine foam has a thickness which is equal to a quarter of the wave length of one of the strongest sound waves which emanates from the compressor.

11. Device according to one of the preceding claims,
**characterized in that**
the melamine foam has a thickness in a region of from 45 to 60 mm.

12. Device according to one of the preceding claims,
**characterized in that**
further inner walls of the inlet chamber (9), which connect the first inner wall (10) and the second inner wall (11), are at least partially lined by means of the melamine foam.

## Revendications

1. Dispositif (1) pour introduire de l'air dans un compresseur (2) d'une installation de turbine à gaz présentant un canal d'entrée d'air (8) et une chambre d'entrée d'air (9) se raccordant au canal d'entrée d'air, laquelle conduit à une ouverture d'entrée (12) du compresseur (2),
ainsi qu'un dispositif pour amortir les émissions de bruit provenant du compresseur (2),
**caractérisé en ce**
**qu'**une première paroi interne (10) de la chambre d'entrée (9), qui se situe en face de l'entrée (12) du compresseur (2), ainsi qu'une deuxième paroi interne (11) qui se situe en face de la première paroi interne (10) et dans le plan de l'ouverture d'entrée (12) du compresseur (2), sont chacune au moins partiellement revêtues d'un matériau atténuateur sonore, le matériau atténuateur sonore contenant une mousse de mélamine (20).

2. Dispositif selon la revendication 1,
**caractérisé en ce que**
la première et la deuxième paroi interne (10, 11) présentent des nervures (16) disposées en forme de grille et la mousse de mélamine (20) est disposée entre les nervures (16).

3. Dispositif selon la revendication 2,
**caractérisé en ce que**
la mousse de mélamine est à chaque fois disposée dans des récipients préfabriqués (15), qui se composent de tôles perforées (18) et qui entourent la mousse de mélamine (20), et les récipients préfabriqués (15) sont disposés entre les nervures (16).

4. Dispositif selon la revendication 3,
**caractérisé en ce que**
dans la région des interfaces des nervures (16), des plaques de fixation (17) sont soudées aux nervures (16) et aux tôles perforées (18) des récipients préfabriqués (15).

5. Dispositif selon la revendication 2,
**caractérisé en ce que**
la mousse de mélamine (20) est directement placée entre les nervures et est à chaque fois recouverte par une tôle perforée (21).

6. Dispositif selon la revendication 5,
**caractérisé en ce que**
les nervures (16) présentent à chaque fois de chaque côté, des languettes (23) qui sont soudées aux tôles perforées (21) qui recouvrent la mousse de mélamine (20).

7. Dispositif selon la revendication 5,
**caractérisé en ce que**
dans la région des interfaces des nervures (16), des plaques de fixation (17) sont soudées aux nervures (16) et aux tôles perforées (21) qui recouvrent la mousse de mélamine (20).

8. Dispositif selon la revendication 1,
**caractérisé en ce que**
la première et la deuxième paroi interne (10, 11) de la chambre d'entrée (9) sont revêtues à chaque fois sur au moins 70 % de leur surface totale par la mousse de mélamine.

9. Dispositif selon la revendication 1,
**caractérisé en ce que**
la première et la deuxième paroi interne (10, 11) sont revêtues à chaque fois sur au moins 80 % de leur surface totale par la mousse de mélamine.

10. Dispositif selon l'une quelconque des revendications précédentes,
**caractérisé en ce que**
la mousse de mélamine présente une épaisseur qui est égale à un quart de la longueur d'onde d'une des ondes sonores les plus grandes sortant du compresseur.

11. Dispositif selon l'une quelconque des revendications précédentes,
**caractérisé en ce que**
la mousse de mélamine présente une épaisseur de l'ordre de 45 à 60 mm.

12. Dispositif selon l'une quelconque des revendications précédentes,
**caractérisé en ce que**
d'autres parois internes de la chambre d'entrée (9), qui relient la première paroi interne (10) à la deuxième paroi interne (11), sont revêtues au moins partiellement par la mousse de mélamine.
